# DEMANDE DE BREVET EUROPEEN

(11) **EP 2 896 604 A1**
(43) Date de publication de la demande: **22.07.2015**
(21) Numéro de dépôt: 15151508.7
(22) Date de dépôt: 16.01.2015
(51) Int. Cl.: C04B 28/00, C04B 28/10, C04B 40/00

(54) **Nouveau perfectionnement à un procédé de fabrication d'au moins un mur vertical à base de terre**

(30) Priorité: 16.01.2014 FR 1400093
(71) Demandeur: Cematerre, 76430 Oudalle (FR)
(72) Inventeur: Lefebvre, Alain, 76430 Oudalle (FR)
(74) Mandataire: Chaillot, Geneviève

(57) **Abrégé**

L'invention propose un procédé de fabrication d'un mur vertical à base de terre, comportant au moins une première étape de préparation d'un élément (12, 18) de coffrage (10) sensiblement vertical, une deuxième étape de préparation d'un matériau constitué d'un mélange comportant au moins 70 à 98% de terre de limon, 1 à 10% de chaux vive, et 1 à 15% ciment, et successivement au moins une troisième étape de remplissage d'une cavité (20) de l'élément (12, 18) de coffrage (10) avec le matériau, au moins une quatrième étape de mise en place du matériau, une cinquième étape de séchage du matériau et une sixième étape de démontage du coffrage (10), caractérisé en ce qu'il comporte une étape préliminaire préalable à la deuxième étape, au cours de laquelle on amende la terre de limon en introduisant dans ladite terre de limon des agrégats dont la taille d'au plus 50mm, selon une proportion massique de 10 à 50% du mélange.

## Description

L'invention concerne un nouveau perfectionnement à un procédé de fabrication d'au moins un mur vertical à base de terre.

L'invention concerne plus particulièrement un procédé de fabrication d'au moins un mur vertical à base de terre, comportant au moins une première étape de préparation d'un élément de coffrage sensiblement vertical déterminant l'épaisseur du mur à réaliser, une deuxième étape de préparation d'un matériau terreux au cours de laquelle on prépare un mélange constituant le dit matériau terreux comportant au moins :
- de la terre de limon, argileuse et/ou sablonneuse, dans une proportion massique de 70 à 98%,
- de la chaux vive, naturelle ou artificielle, dans une proportion massique de 1 à 10%,
- du ciment, dans une proportion massique de 1 à 15%, et successivement au moins une troisième étape de remplissage d'une cavité de l'élément de coffrage avec le matériau, au moins une quatrième étape de mise en place du matériau, une cinquième étape de séchage du matériau et une sixième étape de démontage du coffrage.

La construction de murs verticaux à base de terre est connue de longue date.

Un de ces types de construction, connu sous le nom traditionnel de "pisé", consiste à utiliser de la terre crue compactée dans un coffrage ou banchage. La terre est jetée dans le coffrage par faibles couches de 0,10 m à 1m, puis compactée manuellement dans le coffrage à l'aide d'un pilon.

Ce type de construction permet d'obtenir un mur à base de terre qui est suffisamment poreux pour permettre une respiration idéale des locaux qu'il délimite, mais son usage est limité à des hauteurs réduites du fait de la faible résistance à la compression du matériau utilisé. Il n'est donc pas envisageable avec ce procédé d'élever des murs de grande hauteur.

Par ailleurs, le "pisé" est de par sa porosité très sensible à l'érosion et n'offre de ce fait qu'une tenue limitée dans le temps.

Pour remédier à cet inconvénient, on a proposé dans le document FR-2.935.008 un nouveau procédé de construction mettant en oeuvre un nouveau matériau permettant l'édification de murs de grande hauteur susceptibles de bénéficier d'une durée de vie élevée.

A cet effet, on a proposé un procédé du type décrit précédemment, dans lequel le mélange comporte au moins de la terre de limon, de la chaux vive, et du ciment, pour obtenir ledit matériau.

Selon ce procédé on a proposé d'utiliser en particulier de la terre de limon dans une proportion non déterminée, de la chaux vive dans une proportion de 2% à 3%, et du ciment dans une proportion de 3% à 15%.

Un tel procédé donne globalement satisfaction par rapport au pisé traditionnel.

Or l'utilisation de nouveaux procédés de tassage du mélange, notamment par vibration, a permis de déterminer de nouvelles plages d'utilisation de ces composants, le matériau présentant alors des capacités de résistance encore plus élevées et inattendues.

Aussi, on a proposé dans la demande EP-A2-2.431.545 déposée par la demanderesse un procédé de fabrication d'au moins un mur vertical à base de terre du type décrit précédemment, au cours d'une étape de mélange duquel on prépare un mélange comportant au moins de la terre de limon argileuse et/ou sablonneuse dans une proportion de 70 à 98%, de la chaux vive, naturelle ou artificielle, dans une proportion de 1 à 10%, et du ciment dans une proportion de 1 à 15%.

On a toutefois constaté dans certaines conditions de séchage des phénomènes de retrait ou de fissuration qui imposent d'utiliser le matériau de manière restrictive.

Une solution pour remédier à ces inconvénients consiste à augmenter la granulométrie du mélange.

A cet effet, l'invention propose un procédé de fabrication du type décrit précédemment dans lequel au cours d'une étape de mélange duquel on prépare un mélange amendé par des d'agrégats.

Dans ce but, l'invention propose un procédé de fabrication du type décrit précédemment, caractérisé en ce qu'il comporte une première étape supplémentaire préalable à la troisième étape, au cours de laquelle on ajoute à au moins un des composants dudit mélange des agrégats dont la taille est inférieure ou égale à 50mm, selon une proportion massique de 10 à 50% du mélange constituant le dit matériau terreux.

Selon d'autres caractéristiques de l'invention :
- les agrégats introduits au cours de l'étape préliminaire sont constitués :
   - d'agrégats naturels, notamment de sable et/ou de gravier, et/ou
   - d'agrégats recyclés, notamment de béton concassé.
- le procédé comporte une deuxième étape supplémentaire préalable à la troisième étape, au cours de laquelle on ajoute à au moins un des composants dudit mélange un mélange comportant au moins un adjuvant parmi :
   - un agent plastifiant dans une proportion massique d'au plus 3%, notamment un polymère notamment de type polycarboxylate,
      et/ou
   - un agent de maintien rhéologique, dans une proportion massique d'au plus 2%, notamment une composition à base de polymères,
      et/ou
   - un additif formant liant, dans une proportion massique d'au plus 10%, constitué d'un additif pouzzolanique, notamment un métakaolin obtenu par calcination de kaolin et/ou d'argile kaolinique,
      et/ou
   - un agent anti-retrait dans une proportion massique d'au plus 5%, notamment à base de sulfate de calcium associé à un éther de glycol,
      et/ou
   - un agent rétenteur d'eau dans une proportion d'au plus 2%, notamment à base de cellulose,
   - une résine synthétique dans une proportion massique d'au plus 5%, notamment à base de styrène butadiène,
- au cours de la deuxième étape de préparation du matériau, on prépare un mélange comportant de surcroît des fibres dans une proportion massique d'au plus 1%,
- les fibres comportent des fibres synthétiques, notamment de polypropylène,
- les fibres comportent des fibres naturelles, notamment de lin ou de coton.
- le mélange est préparé selon un taux d'humidité massique de 5 à 50%, pour permettre à l'air de se substituer à l'eau du mélange lors de son évaporation, afin de conférer une capacité d'isolation thermique élevée au matériau une fois que ledit matériau est sec, ledit taux étant notamment obtenu par adjonction d'eau douce au cours de la deuxième étape de préparation du matériau,
- au cours de la deuxième étape de préparation du matériau, on prépare un mélange comportant de surcroît un entraîneur d'air, permettant d'augmenter la quantité d'air dans le mélange sous forme de fines bulles d'air stables et de taille régulières, uniformément réparties dans le mélange,
- au cours de la deuxième étape de préparation du matériau, le mélange est réalisé à l'aide d'un malaxeur, notamment un malaxeur mobile à axes horizontaux ou verticaux permettant la réalisation du mélange sur le site même où doit être réalisé le mur,
- à l'issue de la sixième étape de démontage du coffrage, on pulvérise sur toute surface libre du matériau un produit de cure permettant de s'opposer à l'évaporation de l'eau contenue dans le matériau,
- le procédé comporte au moins une succession de séries d'étapes dont chacune comporte au moins les première, troisième et quatrième étape, pour permettre de monter le mur par remplissages et mises en place successifs du matériau dans des éléments de coffrage empilables les uns sur les autres,
- le procédé comporte au moins une succession de séries d'étapes dont chacune comporte au moins une troisième et une quatrième étape, pour permettre de monter le mur par remplissages et mises en place successifs du matériau dans des éléments de coffrage monoblocs,
- le procédé comporte une troisième étape supplémentaire, interposée entre les première et troisième étapes, au cours de laquelle on introduit dans l'élément de coffrage au moins un élément de renfort de charge du mur, notamment une armature en treillis soudés,
- la quatrième étape de mise en place du matériau est réalisée au moins à l'aide d'un dispositif vibrant, notamment un dispositif de mise en vibration de l'élément de coffrage et/ou au moins une aiguille vibrante plongée dans le mélange.

D'autres caractéristiques et avantages de l'invention apparaîtront à la lecture de la description détaillée qui suit pour la compréhension de laquelle on se reportera aux dessins annexés dans lesquels :
- la figure 1 représente un premier mode d'exécution d'une troisième étape du procédé de l'invention mise en oeuvre à l'aide du coffrage selon l'invention ;
- la figure 2 représente un premier mode d'exécution d'un premier mode de réalisation de la quatrième étape du procédé de l'invention ;
- la figure 3 représente un premier mode d'exécution d'une nouvelle troisième étape du procédé selon l'invention ;
- la figure 4 représente un premier mode d'exécution de la sixième étape du procédé selon l'invention,
- la figure 5 représente un second mode d'exécution d'une quatrième étape du procédé de l'invention mise en oeuvre à l'aide du coffrage selon l'invention ;
- les figures 6 et 7 représentent un second mode d'exécution de nouvelles quatrièmes étapes de réalisation du procédé de l'invention ;
- la figure 8 représente un second mode d'exécution de la sixième étape du procédé selon l'invention.

Dans la description qui va suivre, des chiffres de référence identiques désignent des pièces identiques ou ayant des fonctions similaires.

On a représenté sur les figures la mise en oeuvre d'un procédé de fabrication d'un mur vertical à base de terre selon l'invention.

De manière connue, un tel procédé comporte au moins une première étape de préparation d'un élément de coffrage sensiblement vertical déterminant l'épaisseur du mur à réaliser, une deuxième étape de préparation d'un matériau terreux, et successivement au moins une troisième étape de remplissage de l'élément de coffrage avec le matériau, au moins une quatrième étape de mise en place du matériau, une cinquième étape de séchage du matériau et une sixième étape de démontage du coffrage.

Un procédé de ce type est couramment utilisé dans la fabrication de murs en béton.

Or, un des inconvénients des murs en béton réside dans la difficulté de leur mise en oeuvre sur des chantiers légers, le béton devant être préalablement préparé et amené sur le chantier.

Par ailleurs, une fois coulé et durci, le béton ne peut être que difficilement travaillé, ce qui le rend par exemple impropre à l'édification d'une maison particulière dans laquelle doivent être agencées un grand nombre d'ouvertures.

Enfin, le béton est un matériau peu respirant.

La construction en "pisé", c'est-à-dire en terre simplement compactée, est plus aisée à mettre en oeuvre, mais le pisé n'est pas susceptible de permettre l'édification de murs de hauteur importante, ou susceptibles de supporter des charges importantes.

Par ailleurs, le pisé n'offre qu'une résistance médiocre à l'humidité.

Selon une conception connue, on a proposé un procédé selon lequel, au cours de la deuxième étape de préparation du matériau, on prépare un mélange comportant de la terre de limon, argileuse et/ou sablonneuse, dans une proportion massique de 70 à 98%, de la chaux vive, naturelle ou artificielle, dans une proportion massique de 1 à 10%, et du ciment, dans une proportion massique de 1 à 15%.

Le matériau ainsi obtenu présente les avantages du pisé traditionnel, car la base de terre de limon qui est utilisée permet une bonne respiration du matériau une fois que ledit matériau s'est solidifié. De ce fait, le matériau présente aussi des caractéristiques élevées d'isolation thermique et phonique. Il est de plus particulièrement efficace dans sa capacité à jouer un rôle de coupe-feu.

Le matériau ainsi obtenu est toutefois beaucoup plus résistant que du pisé ordinaire, car la présence de chaux vive permet d'absorber l'humidité du matériau et car le ciment permet de renforcer la cohésion du matériau.

Dans ce matériau, la terre utilisée est une terre argileuse, sablonneuse, ou un mélange de ces deux types de terre selon une proportion de 70 à 98%.

On peut selon ce procédé choisir une terre de limon argileux fin, ou une terre de limon argileux chargée de cailloux.

Un tel mélange peut être tassé à l'aide de moyens de tassage par vibration du matériau, qui permettent de conférer au matériau des caractéristiques de résistance exceptionnelles similaires à celles du béton.

Toutefois, on a constaté dans certaines conditions de séchage des phénomènes de retrait ou de fissuration dans les murs ainsi moulés qui imposent d'utiliser le matériau de manière restrictive en prenant des nombreuses précaution, qui rendent son utilisation malaisée.

Une solution pour remédier à ces inconvénients consiste à augmenter la granulométrie du mélange.

A cet effet, l'invention propose un procédé de fabrication du type décrit précédemment dans lequel, au cours d'une étape de mélange, on prépare un mélange amendé par des agrégats.

Dans ce but, l'invention propose un procédé de fabrication du type décrit précédemment, une première étape supplémentaire préalable à la troisième étape, au cours de laquelle on ajoute à au moins un des composants dudit mélange des agrégats dont la taille est inférieure ou égale à 50mm, selon une proportion massique de 10 à 50% du mélange constituant ledit matériau terreux.

Les agrégats peuvent être de deux types. Il peut s'agir d'agrégats naturels, tel que du sable et/ou de gravier, ou bien des agrégats recyclés, tels que du béton ou du mortier concassé.

Bien entendu les différents types d'agrégats peuvent être mélangés et combiner agrégats naturels ou recyclés, selon des proportions variables.

Par ailleurs, le procédé comporte une deuxième étape supplémentaire préalable à la troisième étape, au cours de laquelle on ajoute à au moins un des composants dudit mélange un mélange comportant au moins un adjuvant qui permet avantageusement de limiter de manière encore plus efficace les phénomènes de retrait ou de fissuration.

Avantageusement, il est possible d'incorporer dans le mélange un agent plastifiant dans une proportion massique d'au plus 3%, notamment un polymère notamment de type polycarboxylate,

Il est aussi possible d'incorporer dans le mélange un agent de maintien rhéologique, dans une proportion massique d'au plus 2%, notamment une composition à base de polymères.

Il est aussi possible d'incorporer dans le mélange un additif formant liant, dans une proportion massique d'au plus 10%, constitué d'un additif pouzzolanique, notamment un métakaolin obtenu par calcination de kaolin et/ou d'argile kaolinique.

Il est aussi possible d'incorporer dans le mélange un agent anti-retrait dans une proportion massique d'au plus 5%, notamment à base de sulfate de calcium associé à un éther de glycol.

Il est aussi possible d'incorporer dans le mélange un agent rétenteur d'eau dans une proportion d'au plus 2%, notamment à base de cellulose.

Il est enfin possible d'incorporer dans le mélange une résine synthétique dans une proportion massique d'au plus 5%, notamment une résine à base de styrène butadiène.

Il sera compris que chacun de ces adjuvants peut être ajouté au mélange séparément ou en combinaison.

Chacune des première ou deuxième étape supplémentaire peut intervenir préalablement à la deuxième étape, par ajout dans l'un des composants, ou pendant la deuxième étape, par ajout dans le mélange, sans limitation de l'invention.

Le dosage doit en tout état de cause être effectué de manière que les agrégats représentent une proportion massique de 10 à 50% du mélange final.

En variante du procédé faisant l'objet de l'invention, au cours de la deuxième étape de préparation du matériau, on prépare un mélange comportant non seulement au moins de la terre de limon, de la chaux vive, et du ciment, mais aussi des fibres dans une proportion d'au plus 1%, ce qui correspond sensiblement à 0,1 à 15 kg par mètre cube de mélange.

Les fibres peuvent être ajoutées au mélange amendé par des agrégats, indépendamment ou non de l'ajout d'adjuvants.

Selon une première variante de ce second mode d'exécution, les fibres comportent des fibres synthétiques, notamment de polypropylène.

Selon une seconde variante de ce second mode d'exécution, les fibres comportent des fibres naturelles, notamment de lin ou de coton.

Quel que soit le mode de mise en oeuvre du procédé, que le mélange soit pourvu ou non de fibres, on utilisera de préférence un ciment à prise normale disponible par exemple dans le commerce sous la référence PORTLAND CPJ 45.

Cette composition permet d'obtenir un matériau offrant une résistance à la compression d'environ 20 à 30 MPa, ce qui permet, contrairement au pisé traditionnel, de réaliser des murs de plusieurs mètres de haut lors d'une seule application du procédé.

Une autre caractéristique particulièrement avantageuse du procédé objet de l'invention est que, quel que soit son mode d'exécution, au cours de la deuxième étape de préparation du matériau, la préparation du mélange selon un taux d'humidité de 5 à 50 % permet à l'air ambiant, au fur et à mesure que le matériau sèche et que l'eau qu'il contient s'évapore, de se substituer à l'eau du mélange. De la sorte, l'air contenu dans le matériau confère audit matériau, une fois sec, une capacité d'isolation thermique élevée.

Selon le taux d'humidité requis dans le mélange, on pourra soit se contenter de l'humidité naturellement contenue dans les composants constitutifs du mélange, soit obtenir ce taux d'humidité par adjonction d'eau douce au cours de la deuxième étape de préparation du matériau.

L'avantage de ce matériau est de pouvoir être préparé sur le site même où doit être édifié le mur. Ainsi, au cours de la deuxième étape de préparation du matériau, le mélange peut être réalisé à l'aide d'un malaxeur, notamment un malaxeur mobile à axes horizontaux ou verticaux porté de manière connue par un engin de chantier du type tracteur (non représenté).

Toutefois, cette configuration n'est pas limitative de l'invention. Le mélange peut également être réalisé en centrale à béton conventionnelle fixe et acheminé sur le chantier par l'intermédiaire d'un camion toupie conventionnel.

Avantageusement, au cours de la deuxième étape de préparation du matériau, on peut ajouter au mélange un entraîneur d'air, permettant d'augmenter la quantité d'air dans le mélange sous forme de fines bulles d'air stables et de taille régulière, uniformément réparties dans le mélange.

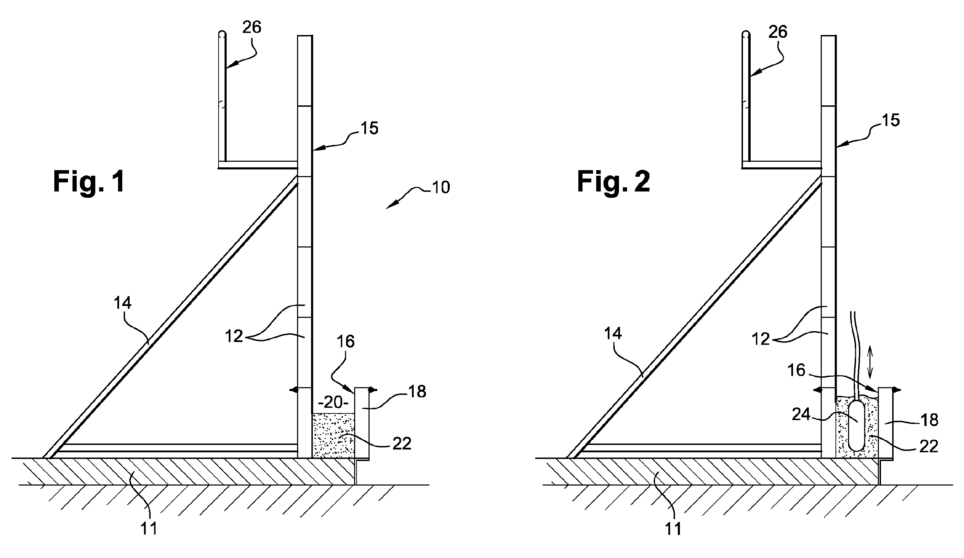

Selon un premier mode d'exécution du procédé qui a été représenté aux figures 1 à 4, le procédé de fabrication comporte de préférence au moins une succession de séries d'étapes dont chacune comporte au moins les première, troisième et quatrième étapes, pour permettre de monter le mur par remplissages et mises en place successifs du matériau dans des éléments de coffrage empilables les uns sur les autres.

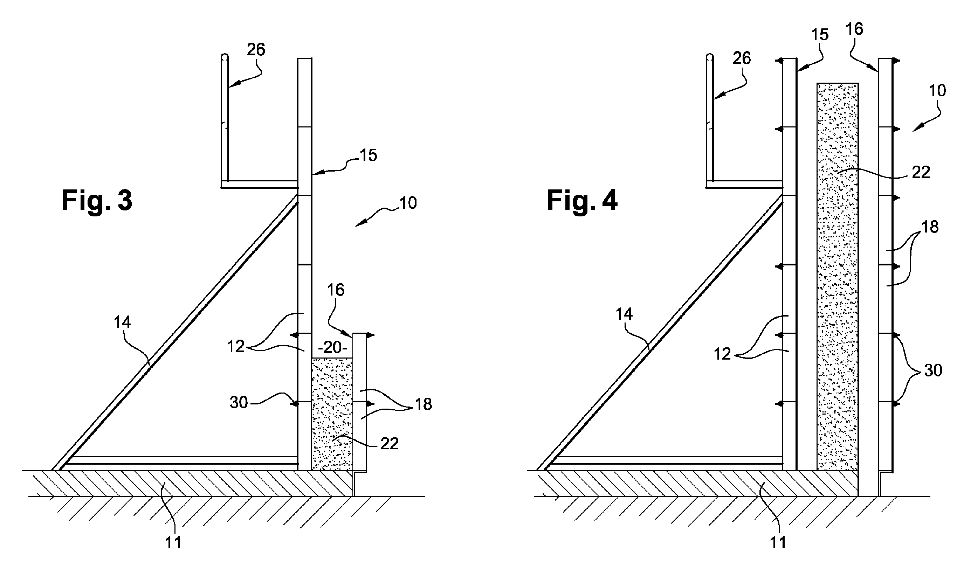

A cet effet, comme l'illustrent plus particulièrement les figures 1 et 3, sur un sol ou une dalle 11, le coffrage 10 comporte conformément à l'invention un empilement d'éléments de coffrage comportant chacun au moins un élément 12 de paroi verticale intérieure, maintenu par au moins une structure 14 d'étai, et un élément 18 de paroi verticale extérieure, au moins les éléments de coffrage verticaux extérieurs 18 étant ajoutés successivement les uns sur les autres au fur et à mesure de la montée du mur, c'est-à-dire au cours de troisièmes étapes successives.

Comme l'illustre la figure 1, il est possible de mettre en place préalablement tous les éléments 12 de paroi verticale intérieure, puis successivement les éléments de coffrage verticaux extérieurs 18. Ceci permet de ne mettre en place qu'une structure d'étai 14, mise en place dès le début de l'opération.

En variante (non représentée), il est possible de mettre en place successivement par paires les éléments 12 de paroi verticale intérieure et les éléments de coffrage verticaux extérieurs 18, mais ceci impose de modifier la structure d'étai 14 au fur et à mesure de l'empilement des éléments 12.

Les éléments 12 de paroi verticale intérieure forment donc une paroi intérieure 15 et les éléments de coffrage verticaux extérieurs 18 forment donc une paroi intérieure 16.

Les parois 15 et 16 délimitent donc entre elles une cavité 20.

De préférence, le coffrage 10 est donc réalisé au cours d'une première étape au cours de laquelle on met en place la paroi 15 dans sa totalité et un élément 18 de coffrage vertical. Puis on prépare le mélange au cours de la deuxième étape.

Comme l'illustre la figure 1 qui représente une troisième étape initiale du procédé de l'invention, le matériau 22 est alors introduit dans la cavité 20.

Puis comme l'illustre la figure 2, au cours d'une quatrième étape du procédé, on met en place le matériau 22.

De préférence, selon un premier mode de réalisation de cette quatrième étape, la mise en place du matériau 22 est réalisée au moins à l'aide d'un dispositif vibrant, notamment un dispositif de mise en vibration de l'élément de coffrage et d'une ou plusieurs aiguilles vibrantes 24 plongées dans le mélange, comme représenté à la figure 2.

Ces aiguilles sont du type de celles qui sont couramment rencontrées sur les chantiers pour réaliser la vibration du béton.

Selon un second mode de réalisation de cette quatrième étape (non représenté) la mise en place du matériau 22 pourrait être réalisé à l'aide d'un pilon.

Ce pilon pourrait être manuel ou pneumatique.

Bien entendu, il sera compris qu'en variante, (non représentée), la mise en place du matériau pourrait être réalisée selon une combinaison de ces deux variantes, c'est-à-dire à la fois à l'aide d'un pilon et par vibrations.

Si le mur obtenu est assez haut, on passe alors à une cinquième étape au cours de laquelle on laisse sécher le matériau, puis à une sixième étape au cours de laquelle on ôte le coffrage 10.

Si le mur n'est pas assez haut, à l'issue de la quatrième étape de mise en place, on rajoute un élément 18 vertical extérieur au cours d'une nouvelle première étape de préparation du coffrage 10.

Chaque élément 18 peut être fixé au précédent à l'aide de fixations 30.

Puis on remplit à nouveau la cavité 20 de matériau 22 selon une nouvelle troisième étape, puis on met en place à nouveau ce matériau 22 à l'aide de l'aiguille vibrante.

L'opération est alors répétée jusqu'à ce que la hauteur de mur voulue soit obtenue.

A partir d'une hauteur déterminée, on peut adjoindre au coffrage 10 une passerelle 26 permettant de circuler en hauteur le long du mur et d'effectuer les quatrièmes étapes de mise en place.

Enfin, comme l'illustre la figure 4, dans un mode d'exécution comme dans l'autre, lors d'une sixième étape de démontage du coffrage, on libère le mur du coffrage 10.

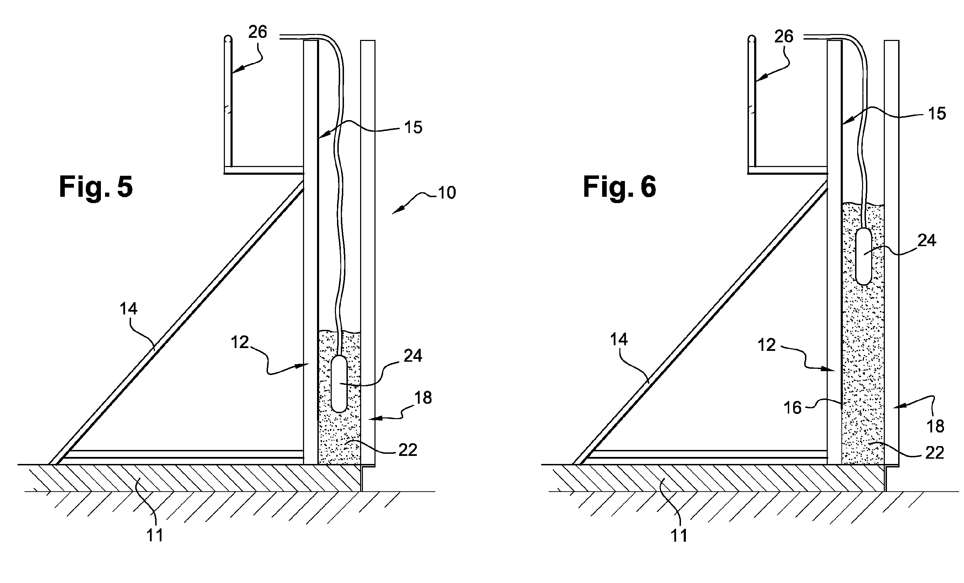

Selon un second mode d'exécution du procédé qui a été représenté aux figures 5 à 8, le procédé de fabrication comporte de préférence au moins une succession de séries d'étapes dont chacune comporte au moins les première, troisième et quatrième étape, pour permettre de monter le mur par remplissages et mises en place successifs du matériau dans des éléments de coffrage fixes.

A cet effet, comme l'illustrent plus particulièrement les figures 5 à 8, sur un sol ou une dalle 11, le coffrage 10 comporte conformément à l'invention un élément 12 de paroi verticale intérieure, maintenu par au moins une structure 14 d'étai, et un élément 18 de paroi verticale extérieure, tous deux monoblocs.

Comme l'illustre la figure 1, il est possible de mettre en place préalablement l'élément 12 de paroi verticale intérieure, puis l'élément 18 de coffrage vertical extérieur 18. Ceci permet de ne mettre en place qu'une structure d'étai 14, mise en place dès le début de l'opération.

L'élément 12 de paroi verticale intérieure comporte donc une paroi intérieure 15 et l'élément de coffrage vertical extérieur 18 comporte donc une paroi intérieure 16.

Les parois 15 et 16 délimitent donc entre elles une cavité 20.

De préférence, le coffrage 10 est donc réalisé au cours d'une première étape, représentée à la figure 5, au cours de laquelle on met en place comme précédemment expliqué les éléments 12 et 18.

Puis on prépare le mélange au cours de la deuxième étape.

Le matériau 22 est alors introduit dans la cavité 20 au cours d'une troisième étape initiale du procédé de l'invention (non représentée).

Puis comme l'illustre la figure 5, au cours d'une quatrième étape initiale du procédé, on met en place le matériau 22.

De préférence, selon un premier mode de réalisation de cette quatrième étape, la mise en place du matériau 22 est réalisée au moins à l'aide d'un dispositif vibrant, notamment un dispositif de mise en vibration de l'élément de coffrage et d'une ou plusieurs aiguilles vibrantes 24 plongées dans le mélange, comme représenté à la figure.

Ces aiguilles sont du type de celles qui sont couramment rencontrées sur les chantiers pour réaliser la vibration du béton.

Selon un second mode de réalisation de cette quatrième étape (non représenté) la mise en place du matériau 22 pourrait être réalisé à l'aide d'un pilon.

Ce pilon pourrait être manuel ou pneumatique.

Bien entendu, il sera compris qu'en variante, (non représentée), la mise en place du matériau pourrait être réalisée selon une combinaison de ces deux variantes, c'est-à-dire à la fois à l'aide d'un pilon et par vibrations.

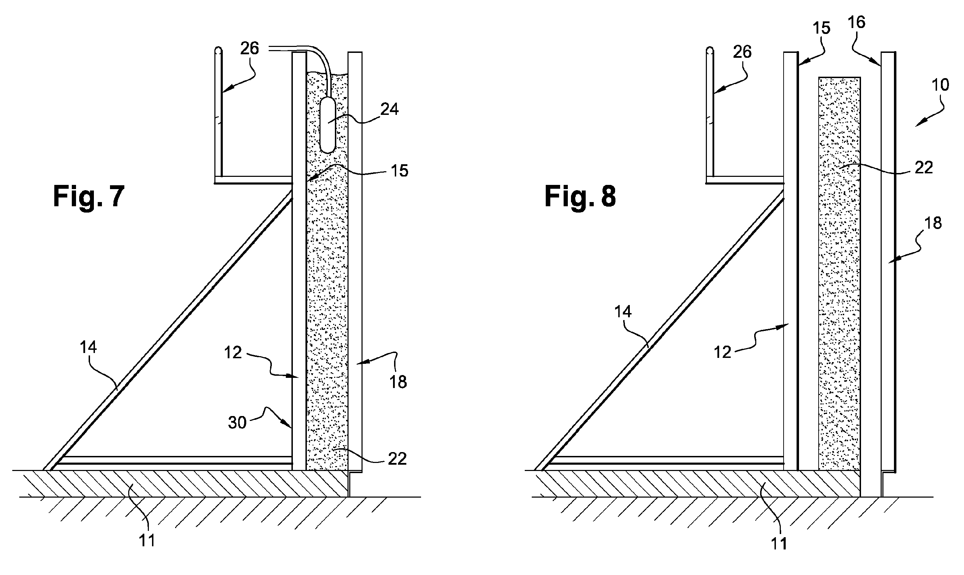

Si le mur obtenu est assez haut, on passe alors à une cinquième étape au cours de laquelle on laisse sécher le matériau, puis à une sixième étape, représentée à la figure 8 au cours de laquelle on ôte le coffrage 10.

Si le mur n'est pas assez haut, à l'issue de la quatrième étape de mise en place, on remplit à nouveau la cavité 20 de matériau 22 selon une nouvelle troisième étape (non représentée), puis on met en place à nouveau ce matériau 22 à l'aide de l'aiguille 24, comme représenté à la figure 6.

Comme l'illustre la figure 7, l'opération est alors répétée jusqu'à ce que la hauteur de mur voulue soit obtenue.

A partir d'une hauteur déterminée, on peut adjoindre comme précédemment au coffrage 10 une passerelle 26 permettant de circuler en hauteur le long du mur et d'effectuer les quatrièmes étapes de mise en place.

De préférence, à l'issue de la sixième étape de démontage du coffrage qui a été représentée aux figures 4 et 8, on pulvérise sur au moins toute surface libre du matériau décoffré un produit de cure permettant de s'opposer à l'évaporation de l'eau contenue dans le matériau.

On remarquera par ailleurs que le procédé pourrait comporter une étape supplémentaire, interposée entre les première et troisième étapes, au cours de laquelle on introduit dans l'élément 10 de coffrage, c'est-à-dire dans la cavité 20 au moins un élément de renfort de charge du mur (non représenté).

Cet élément de renfort de charge pourrait être constitué d'une armature en treillis soudés similaire à celles utilisées dans le coulage du béton armé.

L'invention permet donc d'ériger des murs à base de terre de hauteur élevées, par exemple des murs de trois mètres de haut et plus encore, destinés à des habitations particulières individuelles, en une seule "gâchée", c'est-à-dire en une seule application du procédé.

Les murs ainsi obtenus présentent des qualités élevées de résistance tout en permettant une certaine aération des habitations, de par leurs qualités respirantes et isolantes.

De surcroît le procédé faisant l'objet de l'invention permet d'élever de tels murs de manière extrêmement rapide, le matériau pouvant être fabriqué sur le site du chantier, ce qui permet d'abaisser considérablement les coûts de fabrication d'une habitation individuelle ou d'un ouvrage d'un autre type.

## Revendications

1. Procédé de fabrication d'au moins un mur vertical à base de terre, comportant au moins une première étape de préparation d'un élément (12, 18) de coffrage (10) sensiblement vertical déterminant l'épaisseur du mur à réaliser, une deuxième étape de préparation d'un matériau terreux (22) au cours de laquelle on prépare un mélange constituant le dit matériau terreux comportant au moins :
- de la terre de limon, argileuse et/ou sablonneuse, dans une proportion massique de 70 à 98%,
- de la chaux vive, naturelle ou artificielle, dans une proportion massique de 1 à 10%,
- du ciment, dans une proportion massique de 1 à 15%,
et successivement au moins une troisième étape de remplissage d'une cavité (20) de l'élément (12, 18) de coffrage (10) avec le matériau, au moins une quatrième étape de mise en place du matériau, une cinquième étape de séchage du matériau et une sixième étape de démontage du coffrage (10),
**caractérisé en ce qu'**il comporte une première étape supplémentaire préalable à la troisième étape, au cours de laquelle on ajoute à au moins un des composants dudit mélange des agrégats dont la taille est inférieure ou égale à 50mm, selon une proportion massique de 10 à 50% du mélange constituant le dit matériau terreux (22).

2. Procédé de fabrication selon la revendication précédente, **caractérisé en ce que** les agrégats introduits au cours de l'étape supplémentaire sont constitués :
- d'agrégats naturels, notamment de sable et/ou de gravier, et/ou
- d'agrégats recyclés, notamment de béton concassé.

3. Procédé de fabrication selon l'une des revendications précédentes, **caractérisé en ce qu'**il comporte une deuxième étape supplémentaire préalable à la troisième étape, au cours de laquelle on ajoute à au moins un des composants dudit mélange un mélange comportant au moins un adjuvant parmi :
- un agent plastifiant dans une proportion massique d'au plus 3%, notamment un polymère notamment de type polycarboxylate,
et/ou
- un agent de maintien rhéologique, dans une proportion massique d'au plus 2%, notamment une composition à base de polymères,
et/ou
- un additif formant liant, dans une proportion massique d'au plus 10%, constitué d'un additif pouzzolanique, notamment un métakaolin obtenu par calcination de kaolin et/ou d'argile kaolinique,
et/ou
- un agent anti-retrait dans une proportion massique d'au plus 5%, notamment à base de sulfate de calcium associé à un éther de glycol,
et/ou
- un agent rétenteur d'eau dans une proportion d'au plus 2%, notamment à base de cellulose,
et/ou
- une résine synthétique dans une proportion massique d'au plus 5%, notamment à base de styrène butadiène.

4. Procédé de fabrication selon la revendication précédente, **caractérisé en ce qu'**au cours de la deuxième étape de préparation du matériau (22), on prépare un mélange comportant de surcroît des fibres dans une proportion massique d'au plus 1%.

5. Procédé de fabrication selon la revendication 4, **caractérisé en ce que** les fibres comportent des fibres synthétiques, notamment de polypropylène.

6. Procédé de fabrication selon la revendication 4, **caractérisé en ce que** les fibres comportent des fibres naturelles, notamment de lin ou de coton.

7. Procédé de fabrication selon l'une quelconque des revendications précédentes, **caractérisé en ce que** le mélange est préparé selon un taux d'humidité massique de 5 à 50%, pour permettre à l'air de se substituer à l'eau du mélange lors de son évaporation, afin de conférer une capacité d'isolation thermique élevée au matériau une fois que ledit matériau est sec, ledit taux étant notamment obtenu par adjonction d'eau douce au cours de la deuxième étape de préparation du matériau.

8. Procédé de fabrication selon l'une quelconque des revendications précédentes, **caractérisé en ce qu'**au cours de la deuxième étape de préparation du matériau (22), on prépare un mélange comportant de surcroît un entraîneur d'air, permettant d'augmenter la quantité d'air dans le mélange sous forme de fines bulles d'air stables et de taille régulière, uniformément réparties dans le mélange.

9. Procédé de fabrication selon l'une quelconque des revendications précédentes, **caractérisé en ce qu'**au cours de la deuxième étape de préparation du matériau (22), le mélange est réalisé à l'aide d'un malaxeur, notamment un malaxeur mobile à axes horizontaux ou verticaux permettant la réalisation du mélange sur le site même où doit être réalisé le mur.

10. Procédé de fabrication selon l'une quelconque des revendications précédentes, **caractérisé en ce qu'**à l'issue de la sixième étape de démontage du coffrage, on pulvérise sur toute surface libre du matériau un produit de cure permettant de s'opposer à l'évaporation de l'eau contenue dans le matériau.

11. Procédé de fabrication selon l'une quelconque des revendications précédentes, **caractérisé en ce qu'**il comporte au moins une succession de séries d'étapes dont chacune comporte au moins les première, troisième et quatrième étapes, pour permettre de monter le mur par remplissages et mises en place successifs du matériau (22) dans des éléments (12, 18) de coffrage (10) empilables les uns sur les autres.

12. Procédé de fabrication selon l'une quelconque des revendications précédentes, **caractérisé en ce qu'**il comporte au moins une succession de séries d'étapes dont chacune comporte au moins une troisième et une quatrième étape, pour permettre de monter le mur par remplissages et mises en place successifs du matériau (22) dans des éléments (12, 18) de coffrage monoblocs.

13. Procédé de fabrication selon l'une des revendications précédentes, **caractérisé en ce qu'**il comporte une troisième étape supplémentaire, interposée entre les première et troisième étapes, au cours de laquelle on introduit dans l'élément (12, 18) de coffrage (10) au moins un élément de renfort de charge du mur, notamment une armature en treillis soudés.

14. Procédé de fabrication selon l'une quelconque des revendications précédentes, **caractérisé en ce que** la quatrième étape de mise en place du matériau est réalisée au moins à l'aide d'un dispositif vibrant, notamment un dispositif de mise en vibration de l'élément de coffrage et/ou au moins une aiguille vibrante plongée dans le mélange.
